# DEMANDE DE BREVET EUROPEEN

(11) **EP 1 775 241 A1**
(43) Date de publication de la demande: **18.04.2007**
(21) Numéro de dépôt: 06291552.5
(22) Date de dépôt: 04.10.2006
(51) Int. Cl.: B65G 1/137, B65G 47/51

(54) **Procédé et dispositif de palettisation automatique de colis, en particulier pour la préparation de commandes**

(30) Priorité: 17.10.2005 FR 0510592
(71) Demandeur: Société d'étude et de développement de la Productique, 56270 Ploemeur (FR); Sydel, 56100 Lorient (FR)
(72) Inventeur: Tschaen, Olivier, 56270 Ploemeur (FR); Le Turnier, Philippe, 56650 Inzinac Lochrist (FR)
(74) Mandataire: Bentz, Jean-Paul

(57) **Abrégé**

La présente invention concerne un procédé et un dispositif de palettisation automatique (50a) pour former des palettes de colis ayant des références produit différentes et empilés en colonnes, chaque colonne de colis d'une palette de colis consistant en une ou plusieurs cheminées, chaque cheminée étant formée d'un ou plusieurs colis de références produit identiques, ainsi qu'un procédé de préparation de commandes de colis et une installation de préparation de commandes de colis correspondante. Le procédé de palettisation automatique comprend une étape a) dite de pré-palettisation dans laquelle sont définis informatiquement pour chaque palette de colis son contenu en colis et l'agencement de ces colis, et une étape b) de reconstitution automatique des colonnes de chaque palette de colis par empilage vertical des colis, et de mise en place automatique des colonnes reconstituées sur une palette pour former la palette de colis selon la définition informatique de l'étape a).

## Description

La présente invention concerne un procédé et un dispositif de palettisation automatique des palettes de colis ayant des références produit différentes, ainsi qu'un procédé de préparation de commandes de colis intégrant ledit procédé de palettisation automatique et une installation de préparation de commandes de colis correspondante.

Dans le domaine de préparation de commandes de colis de référence produit différentes, les colis correspondant à une commande de colis d'un client sont classiquement prélevés sur une ou plusieurs rampes de stockage d'une zone de prélèvement, appelée couramment zone de picking, pour être placés sur un convoyeur de prélèvement. Les colis sont ensuite transférés depuis ledit convoyeur de prélèvement vers l'un des convoyeurs d'accumulation d'une zone de palettisation. Dans cette zone de palettisation, des opérateurs récupèrent les colis sur les convoyeurs d'accumulation pour les placer en colonne sur des palettes afin de former des palettes colis correspondant aux commandes de colis des clients. Chaque palette de colis peut comporter de nombreux colis de références produit différentes qui doivent être agencés sur la palette dans un ordre précis selon les souhaits du client. Les taux d'erreurs dans les zones de palettisation sont à ce jour importants. Par ailleurs, les réglementations actuelles et à venir concernant les poids maximums à soulever et à porter par un opérateur sont très sévères, le poids des colis pour la palettisation de commandes de colis comprenant des colis de références produit différentes, est donc limité.

Le but de la présente invention est de proposer une solution visant à palier les inconvénients précités.

A cet effet, la présente invention a pour objet un procédé de palettisation automatique pour former des palettes de colis ayant des références produit différentes et empilés en colonnes, chaque colonne de colis d'une palette de colis consistant en une ou plusieurs cheminées, chaque cheminée étant formée d'un ou plusieurs colis de références produit identiques. Le procédé de palettisation automatique selon l'invention se caractérise en ce qu'il comprend :
a) une étape dite de pré-palettisation dans laquelle sont définis informatiquement pour chaque palette de colis son contenu en colis et l'agencement de ces colis, et
b) une étape de reconstitution automatique des colonnes de chaque palette de colis par empilage vertical des colis, de préférence depuis au moins un convoyeur d'empilage dans des empileurs verticaux disposés le long dudit ou desdits convoyeurs d'empilage, et de mise en place automatique des colonnes reconstituées sur une palette, de préférence par préhension et transfert des colonnes de colis desdits empileurs verticaux vers la palette, pour former la palette de colis selon la définition informatique de l'étape a).

Selon l'étape a) de pré-palettisation, on définit virtuellement l'architecture de chaque palette de colis contenant plusieurs références produit différentes, notamment le nombre de colonne, le nombre de cheminées par colonne, le positionnement des cheminées dans les colonnes multi-cheminées et le positionnement de chaque colonne sur la palette.

Selon une particularité, lors de l'étape b), chaque colonne d'une palette de colis est reconstituée soit par empilage unique, soit par des premiers empilages, chaque premier empilage étant formé d'une ou plusieurs cheminées, et par un empilage final desdits premiers empilages, de préférence dans l'un des empileurs verticaux utilisés pour les premiers empilages.

La présente invention a également pour objet, un procédé de préparation de commande de colis contenant des colis de référence produit différentes, caractérisé en ce qu'il comprend le procédé de palettisation automatique défini précédemment, l'étape a) de pré-palettisation consistant à définir informatiquement une ou plusieurs palettes de colis pour chaque commande de colis, ledit procédé de préparation de commande comprenant, entre les étapes a) et b), pour chaque palette de colis :
- une étape de création d'ordres de prélèvements des colis, consistant par exemple à associer un ordre de prélèvement d'une quantité de colis de référence produit donnée à chaque cheminée de la palette de colis,
- une étape de prélèvement des colis depuis une ou plusieurs rampes de stockage d'une zone de prélèvement, selon les ordres de prélèvement, pour les placer sur un convoyeur de prélèvement, et
- une étape de transfert des colis depuis ledit convoyeur de prélèvement vers une zone de palettisation réalisant l'étape b).

Selon une particularité, les colis sont acheminés en flux tiré vers la zone de palettisation, l'étape de prélèvement étant initiée pour chaque palette de colis en fonction de la possibilité de traitement de la zone de palettisation.

Avantageusement, le procédé comprend une étape de lecture de la référence produit de chaque colis provenant de la zone de prélèvement, et une étape d'association de chaque colis à une palette de colis en cours de réalisation, dont les ordres de prélèvement ont été envoyés, et une étape de pose d'une référence client représentative de ladite palette de colis.

L'invention a également pour objet un dispositif de palettisation automatique pour la mise en oeuvre du procédé de palettisation automatique définis précédemment. Le dispositif de palettisation automatique selon l'invention se caractérise en ce qu'il comprend au moins une ligne d'empilage comportant
- un convoyeur d'empilage fonctionnant pas à pas, destiné à recevoir dans sa partie amont des colis d'une même palette de colis, les colis d'une même palette de colis pouvant être traités sur une ou plusieurs lignes,
- un ensemble d'empileurs verticaux disposés le long dudit convoyeur d'empilage, chaque empileur comportant une structure de stockage et des moyens de transfert automatique aptes à transférer un colis du convoyeur d'empilage vers la structure de stockage pour former, dans ladite structure de stockage, des cheminées de colis d'une palette de colis, en fonction de la définition informatique de ladite palette de colis préalablement effectuée par une unité de traitement informatique, et
- des moyens de préhension et de transfert automatiques aptes à saisir des colonnes de colis dans la structure de stockage d'un empileur pour la transférer sur une palette pour former une palette de colis selon ladite définition informatique.

Selon une particularité, lesdits moyens de préhension et de transfert automatiques sont aptes à transférer une ou plusieurs cheminées d'un empileur vertical vers un autre empileur vertical pour reconstituer une colonne d'une palette de colis.

Avantageusement, lesdits moyens de préhension et de transfert automatiques comprennent un système de déplacement automatique, par exemple de type cartésien, équipé d'un préhenseur, ledit préhenseur comprenant des moyens d'aspiration pour saisir latéralement par aspiration les colonnes de colis par une face latérale ouverte des structures de stockage, et éventuellement une pelle inférieure pour supporter verticalement les colonnes.

Avantageusement, le système de déplacement automatique est apte à déplacer ledit préhenseur pour extraire les colonnes de colis par le haut des structures de stockage des empileurs.

Selon un mode de réalisation, le dispositif de palettisation automatique comprend des empileurs verticaux de type à empilage par le bas, chaque empileur comportant une structure de stockage présentant une ouverture inférieure disposée au-dessus du brin supérieur du convoyeur d'empilage, et des moyens de transfert comprenant un plateau support de charge déplaçable verticalement entre une position basse rétractée dans laquelle ledit plateau est disposé en dessous du brin supérieur du convoyeur d'empilage et une position active permettant d'introduire les colis dans la structure de stockage par son ouverture inférieure, de préférence au-delà de taquets escamotables de la structure de stockage.

Selon un autre mode de réalisation, le dispositif de palettisation automatique comprend des empileurs verticaux de type à empilage par le haut, chaque empileur comprenant une structure de stockage vertical disposée d'un côté du convoyeur d'empilage, son ouverture supérieure ouverte sensiblement au niveau du brin supérieur du convoyeur d'empilage, et des moyens de transfert comprenant un système poussoir apte à transférer latéralement les colis du brin supérieur du convoyeur d'empilage vers la structure de stockage par son ouverture supérieure, la structure de guidage étant équipée d'un plateau support pour supporter les colis, se décalant automatiquement vers le bas après réception d'un nouveau colis.

Avantageusement, le dispositif de palettisation automatique comprend des moyens de lecture disposés en partie aval du convoyeur d'empilage pour lire en automatique la référence produit des colis et éventuellement une référence client des colis. Selon un mode de réalisation, le dispositif comprend un convoyeur d'accumulation destiné à recevoir les colis, un système de transfert de colis disposé en aval du convoyeur d'accumulation pour transférer les colis du convoyeur d'accumulation sur le convoyeur d'empilage.

La présente invention a également pour objet une installation de préparation de commandes de colis pour la mise en oeuvre du procédé de préparation de commandes de colis défini précédemment, ladite installation comprenant une unité de traitement informatique apte à définir informatiquement une ou plusieurs palettes de colis pour chaque commande de colis ; une zone de prélèvement des colis comprenant une ou plusieurs rampes de stockage de colis et au moins un convoyeur de prélèvement pour convoyer les colis prélevés desdites rampes de stockage ; et une zone de palettisation comprenant une unité de palettisation automatique comportant au moins un dispositif de palettisation automatique tel que défini précédemment, la zone de prélèvement et la zone de palettisation étant sous contrôle de l'unité de traitement informatique.

Selon un mode de réalisation, la zone de palettisation comprend une unité de palettisation manuelle et/ou une unité de palettisation semi-automatique comprenant un système d'évacuation de palettes de colis et d'alimentation de palette vide en automatique, vers lesquelles seront orientés les colis de palettes de colis ne répondant pas à des critères de palettisation automatique, ladite installation comprend au moins un convoyeur de triage, recevant les colis provenant du convoyeur de prélèvement, apte à transférer les colis d'une même palette de colis vers l'une des unités de palettisation.

L'invention sera mieux comprise, et d'autres buts, détails, caractéristiques et avantages apparaîtront plus clairement au cours de la description explicative détaillée qui va suivre d'un mode de réalisation particulier actuellement préféré de l'invention, en référence au dessin schématique annexé sur lequel:
- la figure 1 représente une vue schématique de dessus d'une installation de préparation de commande de colis comprenant une unité de palettisation automatique comportant deux dispositifs de palettisation automatique selon l'invention ;
- la figure 2 représente une vue partielle agrandie de la zone de palettisation de l'installation de la figure 1, illustrant un dispositif de palettisation automatique ;
- la figure 3 représente une vue partielle de côté du dispositif de palettisation automatique de la figure 2 illustrant le convoyeur d'empilage et des empileurs verticaux d'une ligne d'empilage ;
- la figure 4 représente une vue en perspective de l'unité de palettisation automatique ; et,
- la figure 5 représente une vue de côté d'un dispositif de palettisation automatique selon une variante de réalisation.

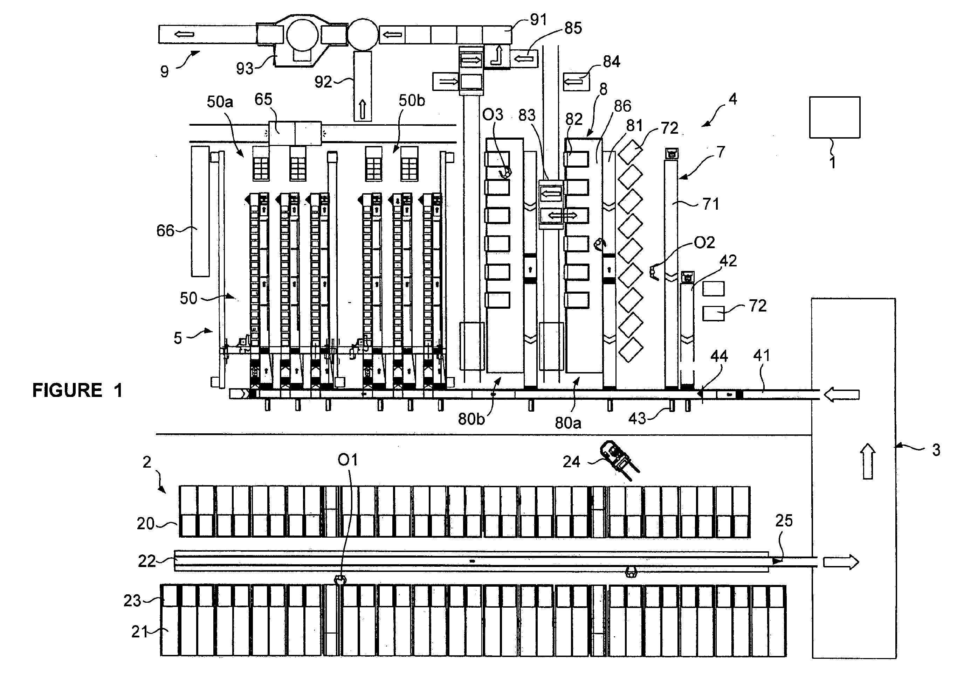

La figure 1 illustre un dispositif de préparation de commande de colis, en particulier pour préparer des commandes dites client, et pour former automatiquement des palettes de colis en vue de leur expédition auxdits clients. Le dispositif peut bien entendu être utilisé pour traiter des commandes en interne. On entend par palette, le support par exemple en bois, destiné à supporter les colis et par palette de colis, l'ensemble constitué par la palette supportant des colonnes de colis. On entend par colis tout type de contenant, par exemple un carton, dans lequel sont placés un ou plusieurs articles ou produits identiques ou non. Chaque colis présente une référence produit représentative du ou des produits qu'il contient, par exemple sous la forme d'un code barre formé sur une étiquette dite étiquette produit ou étiquette stock. Chaque colis est par exemple formé d'un carton, éventuellement ouvert sur le dessus, et éventuellement muni de système de blocage de type ergot/renfoncement permettant un emboîtement des colis lors de leur empilement pour une meilleure stabilité des colonnes.

Le dispositif comprend une zone de prélèvement 2, appelé couramment zone de picking, une zone d'étiquetage 3, une zone de palettisation 4, chaque zone étant sous contrôle d'une unité de traitement information représentée schématiquement sous la référence 1.

L'unité de traitement informatique 1 traite les différentes commandes de colis, chaque commande comportant des colis de référence produit différentes. L'unité de traitement informatique reçoit les différentes commandes de colis et va générer virtuellement des palettes de colis pour la préparation des commandes. L'unité de traitement va ordonnancer les colis de chaque commande de colis sur une ou plusieurs palettes en fonction des colis en stock dans la zone de prélèvement. Après cette étape d'ordonnancement, l'unité de traitement va effectuer une étape de pré-palettisation consistant à définir précisément l'architecture définitive de chaque palette de colis.

Chaque palette de colis comprend m colonnes et n cheminées. Une cheminée est constituée par un empilement de 1 à q colis ayant la même référence produit, une colonne étant constituée de une ou plusieurs cheminées agencées dans un certain ordre. Certaines colonnes contiennent plusieurs cheminées de références produit différentes ou une seule cheminée si le nombre de colis de même référence est suffisant. Une même référence produit peut donc se trouver dans deux cheminées et donc deux colonnes différentes.

Les colis de référence produit peuvent avoir des dimensions différentes en longueur, largeur et/ou hauteur. Les colonnes sont formées avec des colis ayant des bases (longueur sur largeur) identiques pour permettre leur empilement, la hauteur des colis de référence produit différente dans une même colonne pouvant varier. Les colonnes seront définies de manière à placer les cheminées les plus grandes en dessous, et/ou en fonction de la taille des colis (hauteur), et/ou du poids des colis (colis les plus lourds en dessous), et/ou en fonction d'autres priorités, qui peuvent notamment être définies par le client de la commande de colis et prises en compte par l'unité de traitement, par exemple en fonction de l'ordre de rangement des colis dans un rayonnage. Avantageusement, l'architecture de la palette sera définie de manière à tendre vers une palette de colis comprenant de colonnes ayant sensiblement la même hauteur.

A chaque cheminée de 1 à q colis de même référence produit, l'unité de traitement va associer un ordre de prélèvement de 1 à q colis (OPC) à destination de la zone de prélèvement, n OPC étant ainsi générés pour chaque palette de colis.

La zone de prélèvement 2 comprend un ou plusieurs postes de prélèvement 20, chaque poste comportant deux rangées de rampes de stockage de colis 21 disposées de part et d'autre d'un convoyeur de prélèvement 22 de type à bande sans fin, appelé également collecteur, apte à convoyer sur son brin supérieur les colis prélevés des rampes de stockage vers la zone d'étiquetage 3. Chaque rampe de stockage comprend des colis de même référence produit, stockés par exemple par palette 23, les rampes pouvant être réapprovisionnées au moyen de transpalette 24. Chaque colis stocké présente une étiquette produit portant sa référence produit sous forme d'un code à barre. La zone de prélèvement comprend des afficheurs de type écran rétro-éclairés pour afficher les ordres de prélèvement envoyés par l'unité de traitement informatique. Un afficheur est disposé au niveau de chaque rampe de stockage pour assister les opérateurs de prélèvement 01. Un moyen de lecture, de type lecteur de code barre (LCB) 25, est disposé dans la partie aval du convoyeur pour lire la référence produit des colis.

La zone d'étiquetage, représentée schématiquement sous la référence 3, comprend un poste d'étiquetage automatique comportant d'amont en aval, des moyens de lecture LCB de la référence produit des colis entrant, des moyens d'impression et de pose d'une étiquette dite étiquette client portant une référence client sous la forme d'un code barre, et des moyens de lecture des étiquettes produit et palette, par exemple deux lecteurs LCB, pour contrôler l'association référence client/référence produit de chaque colis.

La zone d'étiquetage peut comprendre en outre un poste d'étiquetage manuel pour traiter les colis nécessitant des opérations particulières sur les produits qu'ils contiennent, telles que la pose d'une étiquette personnalisée sur chaque produit.

La zone de palettisation 4 comprend, une unité de palettisation automatique 5, une unité de palettisation manuelle 7, une unité de palettisation semi-automatique 8, et un convoyeur de triage 41. Le convoyeur de triage 41 reçoit en entrée les colis provenant de la zone d'étiquetage 3 et permet de trier les colis vers les unités de palettisation ou vers un convoyeur dit de rebus 42. Le convoyeur de triage de type à bande sans fin transporte sur son brin supérieur les colis et comprend des moyens de transferts de type poussoir 43, commandés par l'unité de traitement, permettant de pousser latéralement les colis défilant sur le convoyeur de triage vers chacune des unités de palettisation, ainsi que vers le convoyeur de rebus. Il est équipé, en amont des unités de palettisation et du convoyeur de rebus d'un lecteur LCB 44 apte à lire l'étiquette client des colis, et éventuellement l'étiquette produit des colis.

L'unité de palettisation manuelle 7 comprend au moins un poste comportant un convoyeur d'accumulation gravitaire 71 pour l'accumulation des colis affecté audit poste, disposé perpendiculairement au convoyeur de triage, en vis-à-vis d'un système de transfert. Les colis seront récupérés par un opérateur 02 sur le convoyeur d'accumulation pour être placés sur des palettes 72 posées aux sols afin de former des palettes de colis.

L'unité de palettisation 8 semi-automatique comprend au moins un poste, par exemple deux postes 80a, 80b, comportant chacun un convoyeur d'accumulation gravitaire 81 pour l'accumulation des colis affectés audit poste, des convoyeurs de palettes bidirectionnels 82, disposées côte à côte, parallèlement au convoyeur d'accumulation, chaque convoyeur de palettes étant apte à transporter une palette dans deux directions opposées perpendiculaire au convoyeur d'accumulation, un couloir de circulation 86 étant défini entre le convoyeur d'accumulation et les convoyeurs bidirectionnels pour un ou plusieurs opérateurs 03. Un chariot ou navette double 83, pouvant transporter deux palettes, est monté sur des rails disposés parallèlement aux convoyeurs bidirectionnels, du côté opposé au couloir. Le chariot est déplaçable automatique entre, d'une part, les convoyeurs bidirectionnels pour recevoir une palette de colis terminée et amener une palette vide, et d'autre part, une station de chargement 84 pour charger une palette vide sur le chariot et une station de transfert 85 pour transférer une palette de colis vers le convoyeur d'entrée 91 d'une zone d'évacuation 9. Un afficheur est associé à chaque convoyeur bidirectionnel pour assister l'opérateur 03 lors des opérations de palettisation. Le nombre de palettes ouvertes en même temps par poste est par exemple limité physiquement à six, chaque poste comprenant six convoyeurs de palette.

L'unité de palettisation automatique 5 comprend un ou plusieurs postes ou dispositifs de palettisation automatique 50, par exemple deux postes 50a, 50b, tel qu'illustré sur les figures, permettant chacun de reconstituer les colonnes d'une palette de colis, puis de déplacer ces colonnes sur une palette, tout en respectant l'architecture de la palette de colis.

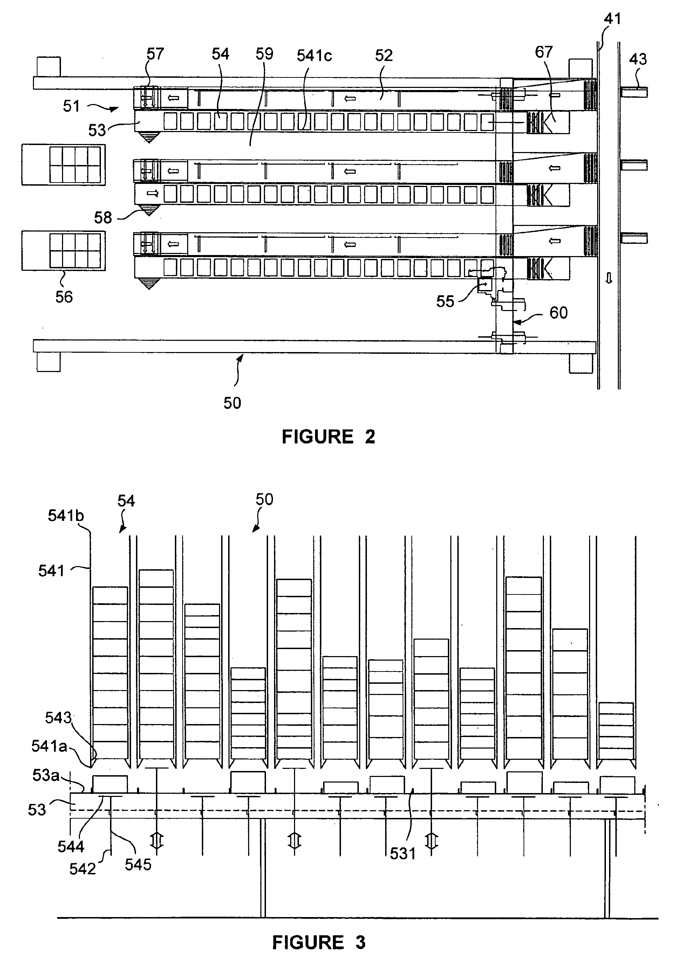

En référence aux figures 2 et 3, chaque poste 50 comprend au moins une ligne d'empilement 51 comportant un convoyeur d'accumulation 52 recevant les colis du convoyeur de triage 41, un convoyeur d'empilage 53 fonctionnant au pas à pas, un ensemble d'empileurs verticaux 54, de type à empilage par le dessous, disposés côte à côte le long du convoyeur d'empilage, permettant le stockage vertical de colis qui vont former les cheminées de la future palette de colis, un système de déplacement automatique ou robot 60 équipé d'une tête de préhension ou préhenseur 55, et des moyens de réception 56 d'au moins une palette. Dans l'exemple illustré, chaque poste comprend trois lignes d'empilage 51.

Le convoyeur d'accumulation 52 est disposé sensiblement perpendiculairement au convoyeur de triage. Un système de transfert 57 de type poussoir, disposé au niveau de la partie aval du convoyeur d'accumulation, permet de transférer latéralement un par un les colis du convoyeur d'accumulation sur le brin supérieur 53a sensiblement horizontal du convoyeur d'empilage, au niveau de sa partie amont. Comme mieux visible sur la figure 3, le convoyeur d'empilage, disposé sensiblement parallèlement au convoyeur d'accumulation est de type transporteur à taquets, le pas d'écartement entre taquets 531 correspondant au pas d'écartement entre les empileurs 54. Il est équipé d'un moteur à vitesse variable et d'un codeur lui permettant d'affiner la courbe d'accélération/décélération ainsi que l'arrêt en position. Des moyens de lecture 58, de type lecteur de code barre, sont disposés en partie aval du convoyeur d'empilage pour lire la référence produit et la référence client du colis venant d'être transféré sur le convoyeur d'empilage. Les lignes sont espacées les unes des autres pour former des allées 59 pour le passage du robot.

Chaque empileur est formé d'une colonne ou structure de stockage et de guidage vertical 541, de section rectangulaire, par exemple de hauteur égale à 2 mètres, disposée au-dessus du brin supérieur du convoyeur d'empilage et d'un système poussoir 542 intégré au convoyeur d'empilage pour transférer les colis du brin supérieur du convoyeur d'empilage vers la structure de stockage par son ouverture inférieure 541a. La structure de guidage est équipée en partie inférieure de taquets escamotables 543, qui s'efface lors du passage d'un colis, permettant le maintien du colis ou des colis d'une cheminée après descente du système poussoir. Le système poussoir comprend un plateau support de charge 544 déplaçable verticalement entre une position basse rétractée dans laquelle le plateau est disposé en dessous du brin supérieur du convoyeur d'empilage et une position active permettant d'introduire les colis de différentes hauteurs au-delà des taquets escamotables de la structure de stockage. Le déplacement vertical du plateau est réalisé au moyen d'une crémaillère 545 solidaire du plateau 544 qui engrène avec le pignon d'un moteur à vitesse variable monté fixe sur un support. Le moteur à vitesse variable est contrôlé par un calculateur selon une courbe d'accélération/décélération permettant notamment au colis soulevé d'arriver avec une vitesse quasi nulle au contact du dernier colis placé dans la structure de stockage. Au moins la face latérale 541c (figure 2) des structures de stockage, opposée au convoyeur d'accumulation, orientée côté allée 59, est ouverte sur toute leur hauteur pour permettre l'extraction des colis par le robot.

Dans le mode de réalisation illustré, les empileurs des trois lignes sont tous identiques, ils peuvent recevoir dans leur structure de stockage uniquement des colis de base identique. Dans des variantes de réalisation, les empileurs diffèrent dans une même ligne et/ou d'une ligne d'empilage à l'autre pour traiter des colis de base différente (longueur et/ou largeur différentes). Différents paramètres de chaque poste de palettisation automatique peuvent être modifiés en fonction de l'utilisation de l'installation, notamment : nombre d'empileurs par ligne d'empilage; nombre de lignes d'empilage par poste ; taille des convoyeurs d'accumulation; entraxe entre les lignes d'empilage ; entraxe entre les empileurs d'une même ligne d'empilage ; vitesse de la ligne d'empilage ; temps de transfert d'un colis dans un empileur ; hauteur des empileurs.

Les colis qui n'ont pas été empilés dans un des empileurs tombent par gravité sur un convoyeur de rebus 67 est disposé en aval de chaque convoyeur d'empilage.

Le robot 60 équipé du préhenseur 55 permet de transférer automatiquement les colonnes de colis des empileurs vers une palette pour former la palette de colis, et le cas échéant, de transférer une ou plusieurs cheminées d'un empileur vers un autre empileur pour reconstituer une colonne de colis. Le robot est de type cartésien à trois axes avec des axes X et Y sur pont roulant, et un axe Z pour un déplacement de la tête au-dessus des empileurs d'une ligne à l'autre et déplacement de la tête vers le bas pour manipuler les colonnes ou cheminées des empileurs et pour déposer les colonnes sur une palette.

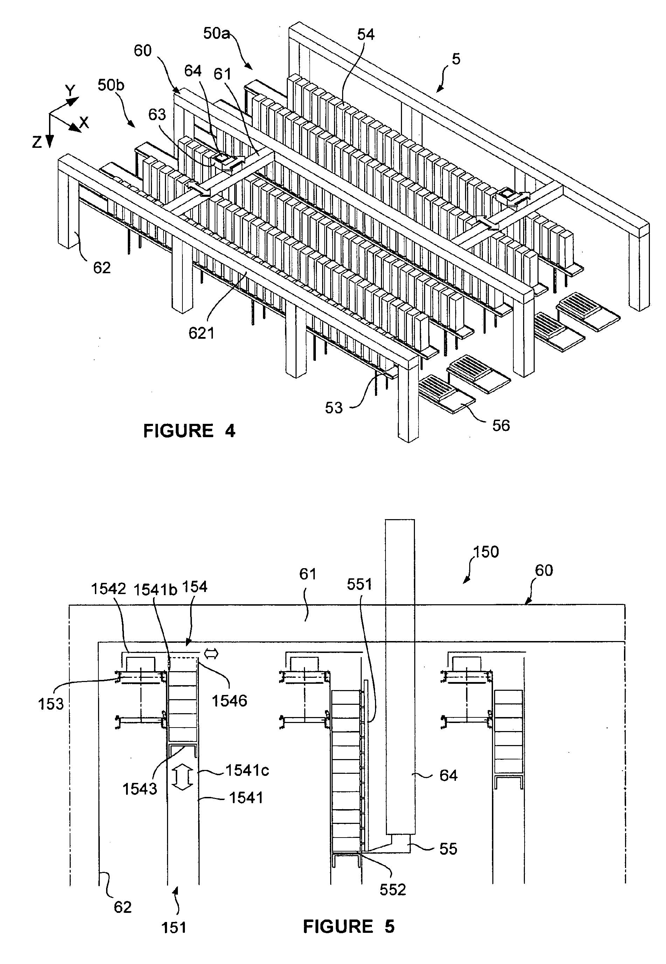

En référence à la figure 4, sur laquelle les convoyeurs d'accumulation ne sont pas représentés, le robot 60 comprend un premier chariot 61 monté mobile selon une première direction horizontale X entre les deux poutres support parallèles 621 d'un portique 62, un deuxième chariot 63 monté mobile sur le premier chariot selon une deuxième direction horizontale Y perpendiculaire à la première, et un troisième chariot 64 monté mobile sur le deuxième chariot selon une troisième direction verticale Z. Les déplacements du premier, deuxième et troisième chariots sont assurés par des moyens d'entraînement embarqués sur chacun d'entre eux, et asservis par l'unité de traitement.

En référence à la figure 5, le préhenseur 55 est assemblé à l'extrémité inférieure du troisième chariot 64, de manière pivotante, de manière à pouvoir pivoter de 180° autour de l'axe Z embarqué. Le préhenseur 55 comprend un front ou caisson vertical d'aspiration 551 apte à venir en contact avec tous les colis d'une colonne formée dans un empileur, pour le maintien latéral de la colonne, et une pelle à dégagement 552 apte à venir sous le colis inférieur de la colonne pour le support vertical de la colonne. Le préhenseur du robot cartésien entre en contact avec les colis par la face ouverte 541c de la structure de stockage pour extraire la colonne de colis par le haut, par l'ouverture supérieure 541b, les colis de la colonne étant plaqués par aspiration contre le front vertical du préhenseur.

Le robot comprend plusieurs paramètres modifiables, notamment les vitesses et accélérations en X et Y du robot, la hauteur de dégagement au-dessus des trois lignes du poste, le temps de prise d'un ou plusieurs colis. Chaque poste de palettisation automatique assure l'empilage et la palettisation automatique par exemple à une cadence de 1250 colis/heure.

Les moyens de réception 56 sont formés de convoyeurs bidirectionnels analogues à ceux décrits précédemment, par exemple au nombre de deux, disposés du côté des lignes opposé au convoyeur de triage. Ces convoyeurs bidirectionnels sont également associés à un système de navette 65 pour l'évacuation de la palette de colis une fois finie vers le convoyeur d'entrée 92 de la zone d'évacuation 9 et pour l'alimentation d'une palette vide depuis une station de chargement 66.

Le fonctionnement de l'installation selon le procédé selon l'invention va à présent être décrit.

L'unité de traitement 1 détermine pour chaque palette de colis le nombre m de colonne, du nombre n de cheminées par colonne et le positionnement de chaque colonne sur la palette de colis, associe les n ordres de prélèvement correspondant aux n cheminées. L'unité de traitement détermine pour chaque palette de colis dans quelle unité de palettisation sera constituée la palette de colis. Les palettes de colis qui répondent à des critères définis permettant de maintenir une cadence horaire annoncée, tel qu'un nombre de colis minimum par cheminée, un nombre de cheminées maximum et un nombre total de cheminée minimum, seront affectées à un poste 50a, 50b de l'unité de palettisation automatique 50. Les palettes de colis ne répondant pas aux critères de palettisation automatique seront affectées à l'un des postes 80a, 80b de palettisation semi-automatique 8. Les palettes de colis comprenant un petit nombre de colis (palette incomplète), des formats de colis spécifiques et/ou dont l'architecture est compliquée (nombre de cheminée très important, temps d'ouverture de la palette importante) seront affectées à l'unité de palettisation manuelle 7.

Dans le procédé de palettisation automatique selon l'invention, l'objectif est de réguler l'arrivée des colis et de limiter le nombre de palettes ouvertes dans la zone de palettisation, et plus particulièrement dans chacun des postes de l'unité de palettisation automatique, tout en maintenant une productivité en rapport avec les contraintes de délais classiques de préparation de commandes, notamment dans le domaine agroalimentaire. Les colis sortant de la zone de prélèvement arrive en flux dit tiré, initié par la zone de palettisation. C'est la baisse de charge de travail de la zone de palettisation qui commande le lancement d'une nouvelle palette de colis.

Lorsque l'un des postes de l'unité de palettisation automatique est disponible pour le lancement d'une nouvelle de palette de colis, les nOPC correspondant à une palette de colis complète seront annoncés sur les afficheurs de la zone de prélèvement 2. Dès que l'on affiche les OPC d'une palette de colis, l'unité de traitement réserve des empileurs dans ledit poste de palettisation automatique.

Pour chaque palette de colis, l'unité de traitement aura préalablement calculé les délais théoriques de parcours des colis, et les temps théoriques de passage aux différents points de contrôle de l'installation formés par les lecteurs LCD. Sur l'ensemble du circuit de convoyage de l'installation, du collecteur aux unités de palettisation, les colis seront suivis informatiquement par l'unité de traitement par la lecture de la référence produit et/ou de la référence client des colis, pour s'assurer de l'arrivée, dans le délai imparti, de l'ensemble des colis d'une palette de colis sur l'unité de palettisation qui lui a été affectée. Le manque d'un colis attendu à un point de contrôle pourra être traité soit par lancement d'un nouvel OPC, soit par reprise manuelle de la palette de colis en sortie de son poste de palettisation automatique.

Chaque afficheur associé à une rampe de stockage affiche le nombre de colis de même référence produit formant une cheminée. L'opérateur prend sur la rampe de stockage 21 la quantité de colis affichée et les dépose sur le collecteur 22, puis valide l'opération sur l'afficheur. Les colis posés sur le collecteur sont contrôlés par le lecteur LCB 25 (validation du temps par l'unité de traitement), les colis non attendus (en trop) seront éjectés et sortis du circuit.

Les colis sont ensuite convoyés jusqu'à la zone d'étiquetage 3. La référence produit de l'étiquette stock des colis est lue. En fonction de la référence produit, les colis sont orientés vers un poste d'étiquetage automatique ou un poste d'étiquetage manuel. En automatique, l'unité de traitement fait la relation entre la référence produit du colis et les palettes de colis en cours de réalisation et associe le colis à une référence client, qui est imprimée sur une étiquette client, l'étiquette client étant apposée en automatique sur le colis. L'association des deux références d'un colis est alors contrôlée. Les colis sont évacués vers le convoyeur de triage 41 ou vers un convoyeur de rebus en cas d'erreur détectée dans l'association des références. En manuel, un opérateur lit l'étiquette stock avec un pistolet LCB. L'unité de traitement informe alors l'opérateur via un afficheur des opérations à effectuer sur les produits et commande l'édition d'une étiquette client, et éventuellement l'édition d'étiquettes personnalisées pour les produits du colis. L'opérateur effectue les opérations sur les produits (pose des étiquettes personnalisées) et colle l'étiquette client sur le colis. L'opérateur valide les opérations et évacue le colis vers le convoyeur de triage.

La référence client des colis collectés sur le convoyeur de triage 41 est lue par le lecteur 44. Les colis de même référence client sont alors transférés par les systèmes poussoir 43 sur le poste de palettisation qui leur avait été prédéfini au lancement des OPC. En cas d'erreur de lecture, de problème sur l'un des postes de palettisation, ou si un colis est non attendu, il est orienté vers le convoyeur de rebus 42.

Dans l'unité de palettisation manuelle 7, l'opérateur 02 traite les colis dans l'ordre d'arrivée sur le convoyeur d'accumulation 71. L'opérateur identifie les colis par leur étiquette produit et leur étiquette client et les place sur des palettes 72 posées au sol pour reconstituer les palettes de colis.

Dans les postes 80a, 80b de l'unité de palettisation semi-automatique 8, les palettes sont posées sur les convoyeurs de palette. L'opérateur 03 reconstitue les palettes de colis comme dans l'unité manuelle, et une fois une palette de colis terminée, l'opérateur commande son évacuation. La navette double 83 de ce poste se présente devant la palette de colis à sortir, la charge sur sa place vide, se décale et livre une palette vide. La navette va ensuite décharger la palette de colis à la station de transfert 85 et recharge une palette vide à la station de chargement 84.

Dans l'unité de palettisation automatique 5, les colis d'une même palette de colis sont éjectés du convoyeur de triage vers le(s) convoyeur(s) à accumulation 52 d'un poste 50a, 50b. Les colis d'une même palette de colis pourront être traités sur une ou plusieurs lignes d'empilage d'un poste. La cadence instantanée du convoyeur de triage étant supérieure à celle de la ligne d'empilage, le convoyeur d'accumulation permet d'absorber les pointes dans le flux de colis entrant. Les colis sont ensuite mis au pas et transférés un par un sur le convoyeur d'empilage 53 via le système de transfert 57. Les étiquettes de chaque colis entrant sur le convoyeur d'empilage sont lues par le lecteur 58. Le convoyeur d'empilage fonctionnant au pas à pas, les colis s'arrêtent à chaque empileur et sont poussés dans un empileur ou non, en fonction de leur référence produit, pour reconstituer les colonnes de la palette colis. Chaque cheminée dans un empileur comprend des colis de même référence produit et de même référence client.. Lorsque les colis arrivent dans leur ordre de placement dans les colonnes, les colonnes multi-cheminées peuvent se constituer dans un seul empileur au fur et à mesure de l'arrivée des colis. Les cheminées d'une même colonne peuvent être constituées dans plusieurs empileurs différents, le robot va alors déplacer ces cheminées pour reconstituer la colonne. Les colis arrivés par erreur sur la ligne d'empilage, dont la référence produit et/ou la référence client ne correspondent pas aux colis d'une palette de colis affectée à cette ligne, sont évacués sur le convoyeur de rebus 67. Grâce à la lecture des références produit et référence client des colis en entrée du convoyeur de triage et en entrée du convoyeur d'empilage, l'unité de traitement informatique sait à quel moment une cheminée est complète et sait donc aussi à quel instant le robot peut venir reconstituer une colonne ou réaliser une palette de colis. Par ailleurs, une cellule peut être prévue au niveau de l'ouverture inférieure de la structure de stockage des empileurs pour valider le passage de chaque colis introduit. L'unité de traitement établit une liste d'action à réaliser par le robot. Ces actions seront réalisées suivant un ordre défini en fonction de priorités à respecter. L'objectif est de libérer les empileurs le plus rapidement possible et d'optimiser les déplacements robot. Selon un mode de réalisation :
- la réalisation d'une palette de colis par le robot ne peut commencer que lorsque toutes ses cheminées sont présentes dans les empileurs ;
- le robot constitue une seule et unique palette de colis à la fois ;
- le robot reconstitue les colonnes dans un empileur et les déplace au fur et à mesure sur la palette (certaines colonnes seront déjà prêtes) ;
- lorsque aucune palette n'est prête à être réalisée, le robot reconstitue les colonnes des palettes en attente, une colonne ne pouvant être reconstituée que si toutes ses cheminées sont en attente dans les empileurs.

Les palettes de colis terminées sont collectées par la navette 65 en sortie des postes de palettisation automatique et transférées jusqu'à la zone d'évacuation 9. Cette zone évacuation peut comprendre un dispositif de type banderoleuse 93. Pour chaque palette de colis banderolée, une étiquette récapitulative palette-client peut être éditée, après lecture de la référence client d'un colis de la palette de colis, puis posée en automatique sur la palette de colis banderolée.

La figure 5 illustre une variante de réalisation dans laquelle chaque ligne d'empilage 151 d'un poste 150 de l'unité de palettisation automatique comprend des empileurs 154 du type à chargement par le dessus. La ligne comprend un convoyeur d'empilage 153 fonctionnant pas à pas et des empileurs 154 disposés le long du convoyeur d'empilage comprenant une structure de stockage et de guidage vertical 1541, disposée d'un côté du convoyeur d'empilage, son ouverture supérieure ouverte 1541b sensiblement au niveau du brin supérieur du convoyeur d'empilage et un système poussoir 1542 pour transférer latéralement les colis du brin supérieur du convoyeur d'empilage vers la structure de stockage par son ouverture supérieure. La face latérale ouverte 1541c de la structure de stockage se prolonge vers le haut au-delà de l'ouverture supérieure pour former une butée 1546 garantissant l'alignement vertical des colis entrant dans la structure de stockage. La structure de guidage est équipée d'un plateau support motorisé 1543 apte à supporter les colis, se décalant automatiquement vers le bas après réception d'un nouveau colis. Cet empileur permet l'utilisation de système de transfert latéral simple de conception adapté à différents formats de colis.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé de palettisation automatique pour former des palettes de colis ayant des références produit différentes et empilés en colonnes, chaque colonne de colis d'une palette de colis consistant en une ou plusieurs cheminées, chaque cheminée étant formée d'un ou plusieurs colis de références produit identiques, **caractérisé en ce qu'**il comprend :
a) une étape dite de pré-palettisation dans laquelle sont définis informatiquement pour chaque palette de colis son contenu en colis et l'agencement de ces colis, et
b) une étape de reconstitution automatique des colonnes de chaque palette de colis par empilage vertical des colis depuis au moins un convoyeur d'empilage dans des empileurs verticaux disposés le long dudit ou desdits convoyeurs d'empilage, et de mise en place automatique des colonnes reconstituées sur une palette par préhension et transfert des colonnes de colis desdits empileurs verticaux vers la palette, pour former la palette de colis selon la définition informatique de l'étape a).

2. Procédé de palettisation automatique selon la revendication 1, **caractérisé en ce que**, lors de l'étape b), chaque colonne d'une palette de colis est reconstituée soit par empilage unique, soit par des premiers empilages, chaque premier empilage étant formé d'une ou plusieurs cheminées, et par un empilage final desdits premiers empilages.

3. Procédé de préparation de commande de colis contenant des colis de référence produit différentes, **caractérisé en ce qu'**il comprend le procédé de palettisation automatique selon la revendication 1 ou 2, l'étape a) de pré-palettisation consistant à définir informatiquement une ou plusieurs palettes de colis pour chaque commande de colis, ledit procédé de préparation de commande comprenant, entre les étapes a) et b), pour chaque palette de colis :
- une étape de création d'ordres de prélèvements des colis,
- une étape de prélèvement des colis depuis une ou plusieurs rampes de stockage (21) d'une zone de prélèvement (2), selon les ordres de prélèvement, pour les placer sur un convoyeur de prélèvement (22),
- une étape de transfert des colis depuis ledit convoyeur de prélèvement vers une zone de palettisation (4) réalisant l'étape b).

4. Procédé selon la revendication 3 **caractérisé en ce que** les colis sont acheminés en flux tiré vers la zone de palettisation (4), l'étape de prélèvement étant initiée pour chaque palette de colis en fonction de la possibilité de traitement de la zone de palettisation.

5. Dispositif de palettisation automatique pour la mise en oeuvre du procédé selon l'une des revendications 1 ou 2, **caractérisé en ce qu'**il comprend au moins une ligne d'empilage (51, 151) comprenant
- un convoyeur d'empilage (53, 153) fonctionnant pas à pas, destiné à recevoir dans sa partie amont des colis d'une même palette de colis,
- un ensemble d'empileurs verticaux (54, 154) disposés le long dudit convoyeur d'empilage, chaque empileur comportant une structure de stockage vertical (541, 1541) et des moyens de transfert automatique (542, 1542) aptes à transférer un colis du convoyeur d'empilage vers la structure de stockage pour former dans ladite structure de stockage des cheminées de colis d'une palette de colis en fonction de la définition informatique de ladite palette de colis préalablement effectuée par une unité de traitement informatique (1), et
- des moyens de préhension et de transfert automatiques (55, 60) aptes à saisir des colonnes de colis dans la structure de stockage d'un empileur pour la transférer sur une palette pour former une palette de colis selon ladite définition informatique.

6. Dispositif de palettisation automatique (50, 150) selon la revendication 5, **caractérisé en ce que** lesdits moyens de préhension et de transfert automatiques (55, 60) sont aptes à transférer une ou plusieurs cheminées d'un empileur vertical (54, 154) vers un autre empileur vertical pour reconstituer une colonne d'une palette de colis.

7. Dispositif de palettisation automatique (50, 150) selon la revendication 5, **caractérisé en ce que** lesdits moyens de préhension et de transfert automatiques comprennent un système de déplacement automatique (60) équipé d'un préhenseur (55), ledit préhenseur comprenant des moyens d'aspiration (551) pour saisir latéralement par aspiration les colonnes de colis par une face latérale ouverte (541c, 1541c) des structures de stockage (54, 154), et éventuellement une pelle inférieure (552) pour supporter verticalement les colonnes.

8. Dispositif de palettisation automatique (50) selon l'une des revendications 5 à 7, **caractérisé en ce qu'**il comprend des empileurs verticaux (54) de type à empilage par le bas, chaque empileur comportant une structure de stockage (541) présentant une ouverture inférieure (541a) disposée au-dessus du brin supérieur (53a) du convoyeur d'empilage (53), et des moyens de transfert comprenant un plateau support de charge (544) déplaçable verticalement entre une position basse rétractée dans laquelle ledit plateau est disposé en dessous du brin supérieur du convoyeur d'empilage et une position active permettant d'introduire les colis dans la structure de stockage par son ouverture inférieure, au-delà de taquets escamotables (543) de la structure de stockage.

9. Dispositif de palettisation automatique (150) selon l'une des revendications 5 à 7, **caractérisé en ce qu'**il comprend des empileurs verticaux (154) de type à empilage par le haut, chaque empileur comprenant une structure de stockage vertical (1541) disposée d'un côté du convoyeur d'empilage (153), son ouverture supérieure ouverte (1541b) sensiblement au niveau du brin supérieur du convoyeur d'empilage, et des moyens de transfert comprenant un système poussoir (1542) apte à transférer latéralement les colis du brin supérieur du convoyeur d'empilage vers la structure de stockage par son ouverture supérieure, la structure de guidage étant équipée d'un plateau support (1543) pour supporter les colis, se décalant automatiquement vers le bas après réception d'un nouveau colis.

10. Installation de préparation de commande pour la mise en oeuvre du procédé selon l'une des revendications 3 à 4, **caractérisée en ce qu'**elle comprend
- une unité de traitement informatique (1) apte à définir informatiquement une ou plusieurs palettes de colis pour chaque commande de colis ;
- une zone de prélèvement (2) des colis comprenant une ou plusieurs rampes de stockage de colis (21) et au moins un convoyeur de prélèvement (22) pour convoyer les colis prélevés desdites rampes de stockage ; et,
- une zone de palettisation (4) comprenant une unité de palettisation automatique (5) comportant au moins un dispositif de palettisation automatique (50, 150) selon l'une des revendications 5 à 9,
la zone de prélèvement et la zone de palettisation étant sous contrôle de l'unité de traitement informatique.

11. Installation selon la revendication 10, **caractérisée en ce que** la zone de palettisation (4) comprend une unité de palettisation manuelle (7) et/ou une unité de palettisation semi-automatique (8) comprenant un système d'évacuation de palettes de colis et d'alimentation de palette vide en automatique, vers lesquelles seront orientés les colis de palettes de colis ne répondant pas à des critères de palettisation automatique, et au moins un convoyeur de triage (41), recevant les colis provenant du convoyeur de prélèvement (22), apte à transférer les colis d'une même palette de colis vers l'une des unités de palettisation (5, 7, 8).
